(19) Europäisches Patentamt
European Patent Office
Office européen des brevets

(11) EP 1 391 480 A1

(12) EUROPEAN PATENT APPLICATION

(43) Date of publication:
25.02.2004 Bulletin 2004/09

(51) Int Cl.7: C08K 3/36, C08L 101/06, C08J 5/22

(21) Application number: 03018584.7

(22) Date of filing: 18.08.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 20.08.2002 JP 2002239447

(71) Applicants:
- JSR Corporation
Tokyo (JP)
- Honda Giken Kogyo Kabushiki Kaisha
Minato-ku, Tokyo (JP)

(72) Inventors:
- Goto, Kohei
Tokyo (JP)
- Kakuta, Mayumi
Tokyo (JP)
- Asano, Yoichi
Wako-shi, Saitama (JP)
- Kanaoka, Nagayuki
Wako-shi, Saitama (JP)

(74) Representative:
Weiss, Wolfgang, Dipl.-Chem. Dr. et al
Weickmann & Weickmann
Patentanwälte
Postfach 86 08 20
81635 München (DE)

# (54) Proton conductive resin composition, method for preparing the same, and proton conductive membrane comprising the composition

(57) The invention provides a proton conductive resin composition from which proton conductive membranes exhibiting high proton conductivity can be obtained without treatment to increase the acid concentration in the membrane. The invention also provides a method for preparing the composition, and a proton conductive membrane comprising the composition.

The proton conductive resin composition comprises a silica and a proton conductive sulfonated polyarylene. The method for preparing proton conductive resin compositions comprises mixing aggregates of silica powder having an average aggregate diameter of not more than 50 nm with a sulfonated polyarylene.

EP 1 391 480 A1

## Description

### FIELD OF THE INVENTION

The present invention relates to a proton conductive resin composition having improved proton conductivity, a method for preparing the same, and a proton conductive membrane comprising the composition.

### BACKGROUND OF THE INVENTION

Recently, electrolytes have a high tendency to be used in the form of solid rather than the conventional form of (aqueous) solution. This is because firstly those solid electrolytes have good processability so that they can be easily applied in electric and electronic components, and secondly there are trends for reduction of weight, thickness, length and size of such components and further for power saving.

Proton conductive materials, both inorganic and organic, are known in the art. However, inorganic proton conductive materials, such as uranyl phosphate hydrates, come with many difficulties when superposed as a conductive layer onto a substrate or electrode. For example, sufficient contact cannot be achieved in the interface between the conductive layer and a substrate, etc.

On the other hand, organic proton conductive compounds can be exemplified with such organic polymers as polymers belonging to cation exchange resins, e.g., sulfonated vinyl polymers such as polystyrene sulfonic acid; perfluoroalkylsulfonic acid polymers typically represented by Nafion® (Du Pont Kabushiki kaisha); perfluoroalkylcarboxylic acid polymers; and heat resistant polymers, such as polybenzimidazole and polyether ether ketone, in which sulfonic or phosphoric groups have been introduced (Polymer Preprints, Japan, Vol. 42, No. 7, p. 2490-2492 (1993), Polymer Preprints, Japan, Vol. 43, No. 3, p. 735-736 (1994), Polymer Preprints, Japan, Vol. 42, No. 3, p. 730 (1993)).

These organic polymers, which are generally in the form of film when used as electrolyte, are soluble in a solvent and thermoplastic, so that conductive membranes thereof can be advantageously jointly provided on an electrode. However, many of those organic polymers are still insufficient in proton conductivity. In addition to that, they have poor service durability, reduce their proton conductivity at higher temperatures (100°C or above), are embrittled by sulfonation to cause low mechanical strength, and have high moisture dependency. Moreover, the adhesion thereof with an electrode is not satisfactorily good and, because of the water-containing structure of these polymers, the conductive membrane is excessively swollen during operation, resulting in lowered strength and deformation. As explained above, the organic polymers also have various problems hampering their application to electric and electronic components.

U.S. Patent No. 5403675 discloses a solid macromolecule electrolyte comprising a sulfonated inflexible polyphenylene. This polymer, mainly obtained by polymerizing an aromatic compound made up consecutively of phenylene units, has been reacted with a sulfonating agent to introduce therein sulfonic groups. Although the proton conductivity of the sulfonated polymer can be improved by increasing the amount of introduced sulfonic groups, mechanical characteristics such as toughness (e.g., elongation after fracture and folding durability) and resistances to hot water will be remarkably deteriorated at the same time.

In view of the above prior art, the present inventors earnestly studied in search of a way of improving the proton conductivity without increasing the acid concentration in the proton conductive membrane. As a result, they have found that a complex comprising a sulfonated polyarylene and an aqueous inorganic compound can be effectively used for this purpose. Particularly, a complex comprising a sulfonated polyarylene and a silica compound with a specific dimension, has been found to achieve a very high proton conductivity.

### SUMMARY OF THE INVENTION

It is an object of the invention to provide a proton conductive resin composition from which a proton conductive membrane exhibiting a high proton conductivity can be obtained without increasing the acid concentration in the membrane. Further, the invention has an object to provide a method for preparing the above compound and a proton conductive membrane comprising the compound.

The invention provides the following to achieve the above objects.

(1) A proton conductive resin composition comprising a silica and a sulfonated polyarylene capable of proton conduction.

(2) The proton conductive resin composition as described in (1), containing the silica in an amount of 0.5 to 50 parts by weight per 100 parts by weight of the sulfonated polyarylene.

(3) A method for preparing proton conductive resin compositions, comprising mixing of silica powder having an average particle diameter of not more than 50 nm with a sulfonated polyarylene.

(4) A proton conductive membrane comprising the proton conductive resin composition of (1) or (2).

## DESCRIPTION OF THE PREFERRED EMBODIMENTS

Hereinafter, the proton conductive resin composition, method for preparing the same, and proton conductive membrane according to the invention will be described in detail.

The proton conductive resin composition of the invention comprises a silica and a sulfonated polyarylene capable of proton conduction.

(Silica)

The silica for use in the invention may be a colloidal silica, a fumed silica or the like. Preferably, the silica for the composition will be in the form of silica powder with an average particle diameter of not more than 50 nm. Such silica powder is generally aggregates of silica primary particles. A fumed silica is particularly preferred.

The fumed silica used herein is an anhydrous silica which has at least 99.9% purity and is in powder of smallest particle size available on industrial scale production (average primary particle diameter: 7 to 40 nm, specific surface area: 50 to 380 $m^2/g$). The fumed silica may be conveniently prepared by hydrolysis of silicon tetrachloride within an oxygen/hydrogen burner. This hydrolysis reaction, expressed by the following formulae, is generally carried out at high temperatures, usually 1000°C or above.

$$2H_2 + O_2 \rightarrow 2H_2O \quad \text{(Formula 1)}$$

$$SiCl_4 + 2H_2O \rightarrow SiO_2 + 4HCl \quad \text{(Formula 2)}$$

(Formula 1) + (Formula 2)

$$2H_2 + O_2 + SiCl_4 \rightarrow SiO_2 + 4HCl$$

The silica may be, and preferably, treated so that the silanol groups on the surface will be hydrophobic. (Sulfonated polyarylene)

The sulfonated polyarylene is prepared by sulfonating a polymer resulting from the reaction of a monomer (A) of the following formula (A) with at least one monomer (B) selected from the following monomers (B-1) to (B-4).

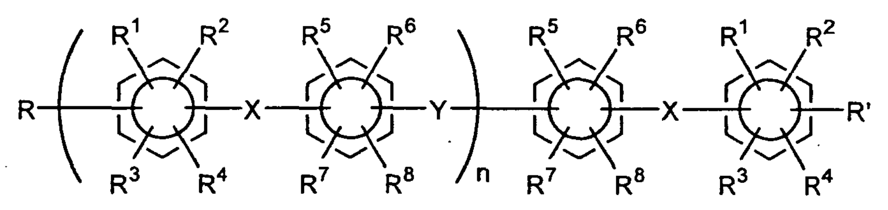

(A)

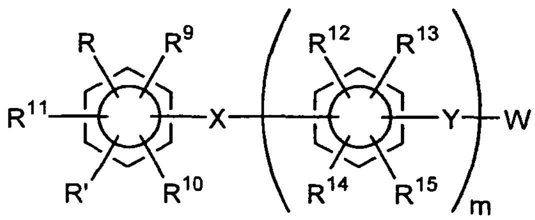

(B-1)

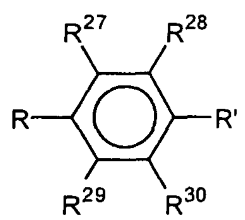

(B-2)

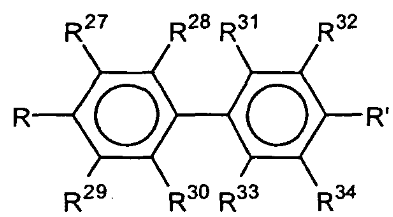

(B-3)

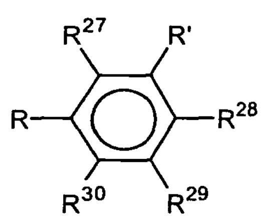

(B-4)

In the formula (A), R and R', which may be the same or different, are independently a halogen atom other than a fluorine atom or a $-OSO_2Z$ group (Z is an alkyl group, a fluorine-substituted alkyl group or an aryl group).
Exemplary alkyl groups indicated by Z include methyl and ethyl; exemplary fluorine-substituted alkyl groups include trifluoromethyl; and exemplary aryl groups include phenyl and p-tolyl.
$R^1$ to $R^8$, which may be the same or different, are independently at least one atom or group selected from the group consisting of a hydrogen atom, a fluorine atom, and alkyl, fluorine-substituted alkyl, allyl and aryl groups.
Examples of the alkyl groups include methyl, ethyl, propyl, butyl, amyl and hexyl. Of these, methyl, ethyl, etc. are preferred.
Examples of the fluorine-substituted alkyl groups include trifluoromethyl, perfluoroethyl, perfluoropropyl, perfluorobutyl, perfluoropentyl and perfluorohexyl. Of these, trifluoromethyl, pentafluoroethyl, etc. are preferred.
Examples of the allyl groups include propenyl.
Examples of the aryl groups include phenyl and pentafluorophenyl.
X is a divalent electron attracting group, and examples thereof include -CO-, -CONH-, - $(CF_2)_p$- (wherein p is

an integer of 1 to 10), $-C(CF_3)_2-$, -COO-, -SO-, $-SO_2-$ and the like.

The electron attracting group is defined as a group with a Hammett substituent constant of not less than 0.06 at the m-position of a phenyl group and not less than 0.01 at the p-position.

Y is a divalent electron donating group, and examples thereof include -O-, -S-, -CH=CH-, -C≡C- and groups represented by the following formulae:

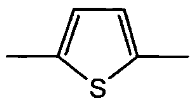
,
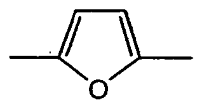

wherein n is 0 or a positive integer of up to 100, preferably up to 80.

Examples of the monomer of the formula (A) include 4,4'-dichlorobenzophenone, 4,4'-dichlorobenzanilide, bis(chlorophenyl)difluoromethane,
2,2-bis(4-chlorophenyl)hexafluoropropane, 4-chlorobenzoic acid-4-chlorophenyl, bis(4-chlorophenyl)sulfoxide, bis (4-chlorophenyl)sulfone, corresponding compounds to the above compounds except that the chlorine atom is replaced with a bromine or an iodine atom, and corresponding compounds to the above compounds except that the halogen substitution occurs at the 3-position in place of at the 4-position.

Examples of the monomer of the formula (A) further include 4,4'-bis(4-chlorobenzoyl)diphenyl ether,
4,4'-bis(4-chlorobenzoylamino)diphenyl ether,
4,4'-bis(4-chlorophenylsulfonyl)diphenyl ether,
4,4'-bis(4-chlorophenyl)diphenyl ether dicarboxylate,
4,4'-bis((4-chlorophenyl)-1,1,1,3,3,3-hexafluoropropyl) diphenyl ether,
4,4'-bis((4-chlorophenyl)tetrafluoroethyl)diphenyl ether,
corresponding compounds to the above compounds except that the chlorine atom is replaced with a bromine or an iodine atom, corresponding compounds to the above compounds except that the halogen substitution occurs at the 3-position in place of at the 4-position, and corresponding compounds to the above compounds except that at least one of the substituent groups at the 4-position of diphenyl ether is altered to the substituent at the 3-position.

Also available as the monomers of the formula (A) are 2,2-bis(4-(4-(4-chlorobenzoyl)phenoxy)phenyl)-1,1, 1,3,3,3-hexafluoropropane, bis(4-(4-(4-chlorobenzoyl) phenoxy)phenyl)sulfone, and compounds represented by the following formulae:

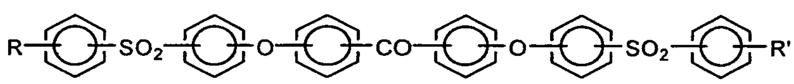

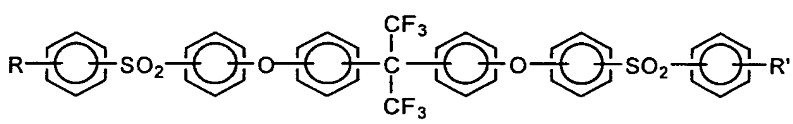

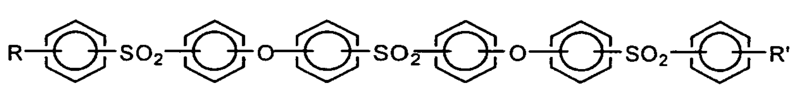

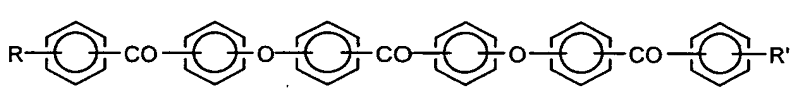

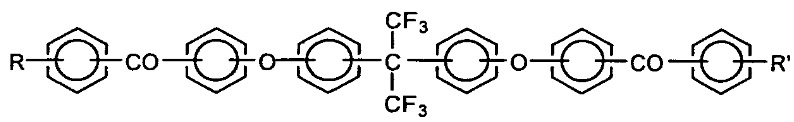

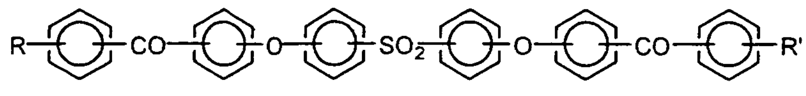

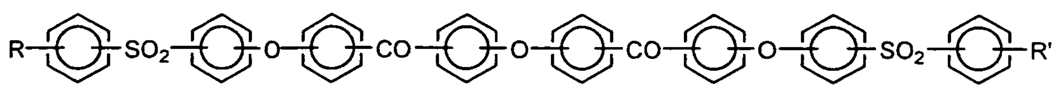

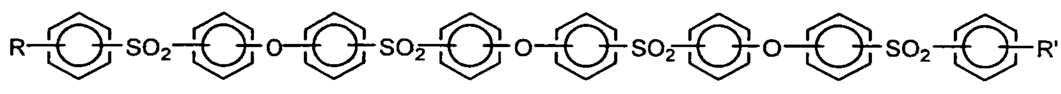

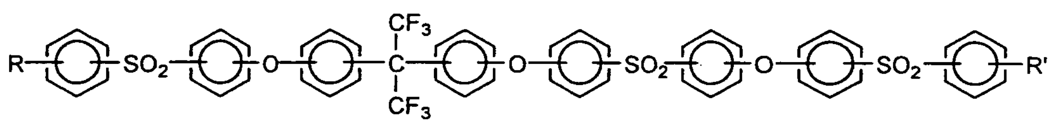

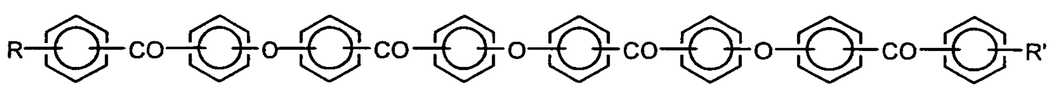

For example, the monomer (A) may be synthesized by the following process.

First, an alkali metal such as lithium, sodium or potassium, or an alkali metal compound such as an alkali metal hydride, an alkali metal hydroxide or an alkali metal carbonate, is added to bisphenols combined together by the electron attracting group for the purpose of converting them into a corresponding alkali metal salt of bisphenol. This addition is made in a polar solvent with a high dielectric constant, such as N-methyl-2-pyrrolidone, N,N-dimethylacetamide, sulfolane, diphenyl sulfone or dimethyl sulfoxide.

The alkali metal, etc. can be generally used in rather slight excess based on the hydroxyl groups of the bisphenol, for example usually 1.1 to 2 times equivalent amount, preferably 1.2 to 1.5 times equivalent amount.

Thereafter, the alkali metal salt of bisphenol is reacted with a halogen-substituted, e.g., fluorine- or chlorine-substituted, aromatic dihalide compound which has been activated by electron attracting groups, in the presence of a solvent which can foam an azeotropic mixture with water, such as benzene, toluene, xylene, hexane, cyclohexane, octane, chlorobenzene, dioxane, tetrahydrofuran, anisole or phenetole. Examples of the above aromatic dihalide compound include 4,4'-difluorobenzophenone, 4,4'-dichlorobenzophenone, 4,4'-chlorofluorobenzophenone, bis(4-chlorophenyl)sulfone, bis (4-fluorophenyl) sulfone, 4-fluorophenyl-4'-chlorophenylsulfone, bis(3-nitro-4-chlorophenyl)sulfone, 2,6-dichlorobenzonitrile, 2,6-difluorobenzonitrile, hexafluorobenzene, decafluorobiphenyl, 2, 5-difluorobenzophenone and 1, 3-bis(4-chlorobenzoyl) benzene. From the viewpoint of reactivity, the aromatic dihalide compound is desirably a fluorine compound. But taking the subsequent aromatic coupling reaction into account, the aromatic nucleophilic substitution reaction should be designed to occur so as to yield a molecule terminated with a chlorine atom at its end(s). The active aromatic dihalide compound may be used in an amount 2 to 4 molar times, preferably 2.2 to 2.8 molar times the amount of the bisphenol. The reaction temperature is in the range of 60 to 300°C, preferably 80

to 250°C. The reaction time is in the range of 15 minutes to 100 hours, preferably 1 to 24 hours. Optimally, the active aromatic dihalide compound is a chlorofluoro compound as shown in the hereinafter formulae that has two halogen atoms different in reactivity each other. The use of this compound is advantageous in that the fluorine atom will preferentially undergo the nucleophilic substitution reaction with phenoxide so that the objective chlorine-terminated active compound may be obtained.

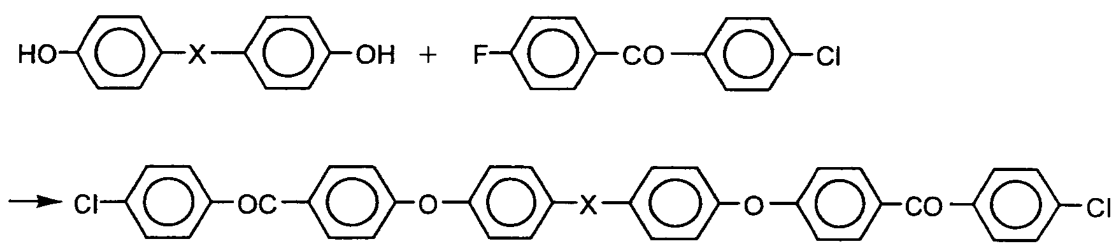

wherein X is as defined in the formula (A).

Other exemplary methods include JP-A-2(1990)/159, in which the nucleophilic substitution reaction is carried out combined with an electrophilic substitution reaction to synthesize the objective flexible compound comprising the electron attracting and electron donating groups.

Specifically, the aromatic bis-halide activated by the electron attracting group, such as bis (4-chlorophenyl) sulfone, is subjected to the nucleophilic substitution reaction with phenol, and the resulting bis-phenoxy substituted compound is subjected to Friedel-Crafts reaction with, for example, 4-chlorobenzoyl chloride to obtain the objective compound. Any of the above-exemplified compounds can be used as the aromatic bis-halide activated by the electron attracting group. The phenol compound may be substituted, but is preferably unsubstituted from the viewpoints of heat resistance and flexibility. When substituted, the substituted phenol compound is preferably an alkali metal salt. Any of the alkali metal compounds listed above can be used for the substitution reaction. The alkali metal compound is used in an amount 1.2 to 2 molar times the amount of the phenol. In the reaction, the aforesaid polar solvent or the azeotropic solvent with water can be employed. To obtain the objective compound, the bis-phenoxy compound is reacted with chlorobenzoyl chloride, as an acylating agent, in the presence of an activator for the Friedel-Crafts reaction, e.g., Lewis acid such as aluminum chloride, boron trifluoride or zinc chloride. The chlorobenzoyl chloride is used in an amount 2 to 4 molar times, preferably 2.2 to 3 molar times the amount of the bis-phenoxy compound. The Friedel-Crafts reaction activator is used in 1.1 to 2 times equivalent amount based on 1 mol of the active halide compound, such as an acylating agent chlorobenzoic acid. The reaction time is in the range of 15 minutes to 10 hours, and the reaction temperature is in the range of -20 to 80°C. As a solvent, chlorobenzene, nitrobenzene or the like that is inactive in the Friedel-crafts reaction may be used.

The monomer (A) in which n is 2 or more may be synthesized through the polymerization also in accordance with the above-mentioned method. In this case,

an alkali metal salt of bisphenol in which bisphenol supplies ether oxygen as the electron donating group Y and is combined with the electron attracting group X of >C=O, $-SO_2-$ and/or $>C(CF_3)_2$, such as 2,2-bis(4-hydroxyphenyl)-1,1,1,3,3,3-hexafluoropropane,

2,2-bis(4-hydroxyphenyl)ketone or 2,2-bis(4-hydroxyphenyl) sulfone, is subjected to a substitution reaction with

an excess of the activated aromatic halogen compound such as 4,4'-dichlorobenzophenone or bis (4-chlorophenyl) sulfone,

in the presence of a polar solvent such as N-methyl-2-pyrrolidone, N,N-dimethylacetamide or sulfolane.

Examples of such monomers (A) include compounds represented by the following formulae:

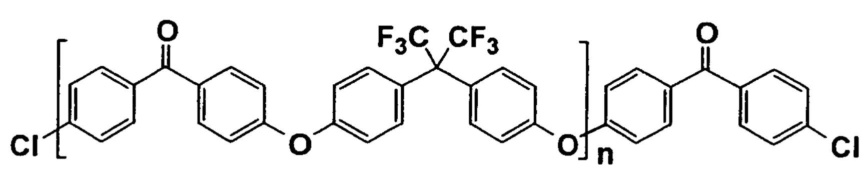

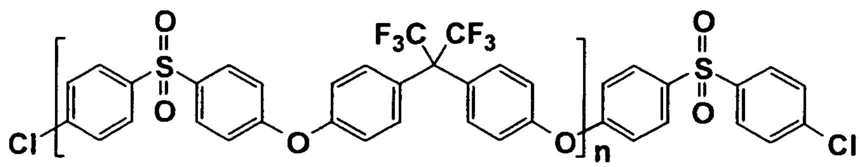

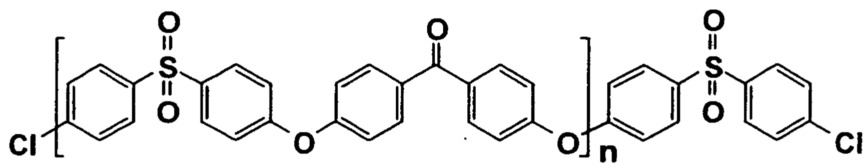

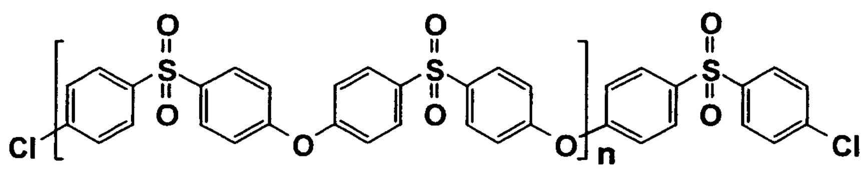

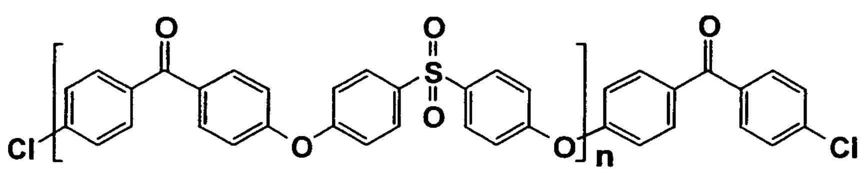

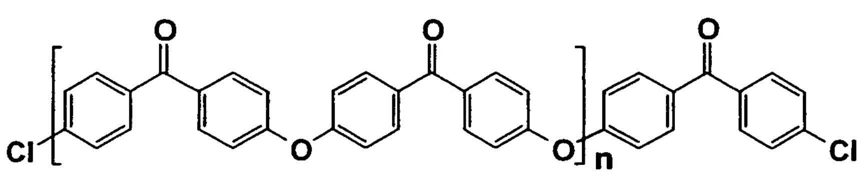

In the above formulae, n is not less than 2, preferably from 2 to 100.

Next, the monomers represented by the formulae (B-1) to (B-4) are described.

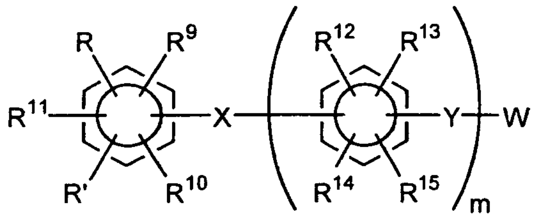

(B-1)

In the above formula, R and R', which may be the same or different, denote the same groups as defined in the formula (A) .

$R^9$ to $R^{15}$, which may be the same or different, are independently at least one atom or group selected from a hydrogen atom, a fluorine atom and an alkyl group.

Examples of the alkyl groups indicated by $R^9$ to $R^{15}$ include the same alkyl groups as indicated by $R^1$ to $R^8$ in the formula (A) .

m is 0, 1 or 2.

X is a divalent electron attracting group selected from the same groups as defined for X in the formula (A).

Y is a divalent electron donating group selected from the same groups as defined for Y in the formula (A).

W is at least one group selected from the group consisting of a phenyl group, a naphthyl group and groups represented by the following formulae (C-1) to (C-3):

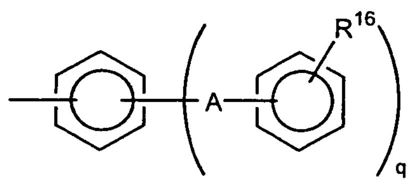

(C-1)

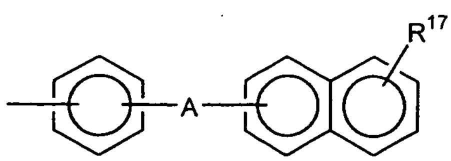

(C-2)

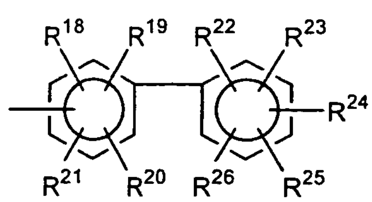

(C-3)

In the above formulae, A denotes an electron donating group or a single bond.

The electron donating group is a divalent electron donating group selected from the same groups as defined for Y in the formula (A).

$R^{16}$ and $R^{17}$ are independently an atom or a group selected from the group consisting of a hydrogen atom, an alkyl group and an aryl group. Examples of the alkyl and aryl groups designated by $R^{16}$ and $R^{17}$ include the same alkyl and aryl groups as indicated by $R^1$ to $R^8$ in the formula (A).

$R^{18}$ to $R^{26}$, which may be the same or different, are independently at least one atom or group selected from a hydrogen atom, a fluorine atom and an alkyl group. Examples of the alkyl groups designated by $R^{18}$ to $R^{26}$ include the same alkyl groups as indicated by $R^1$ to $R^8$ in the formula (A).

q is 0 or 1.

Examples of the monomers of the formula (B-1) include compounds represented by the following formulae:

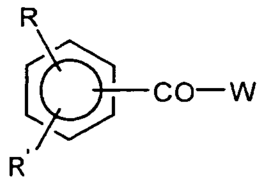

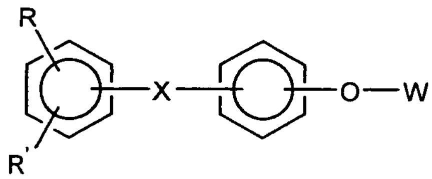

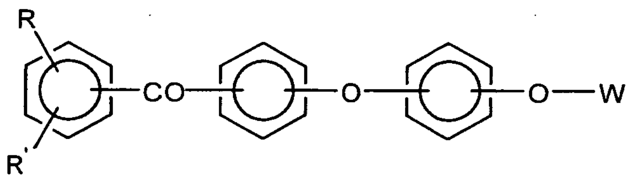

More specifically, the compounds of the formula (B-1) can be exemplified with the following compounds:

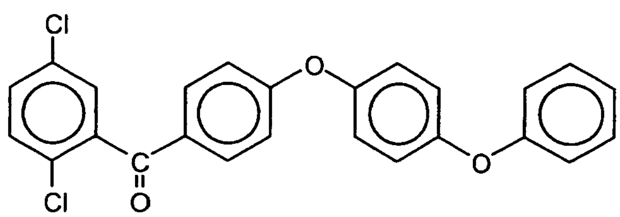

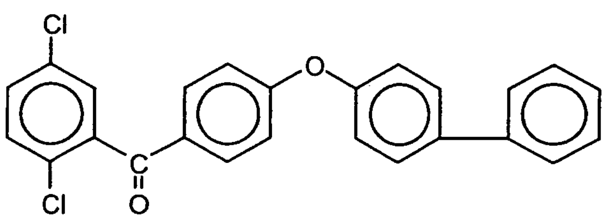

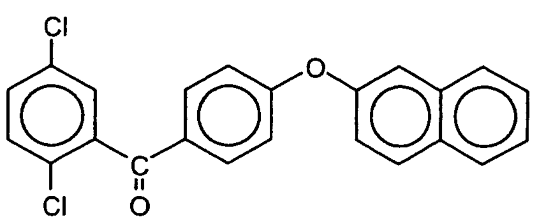

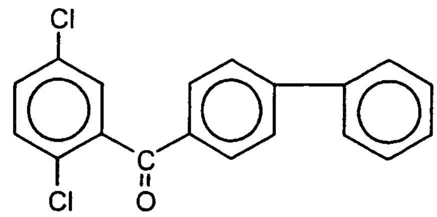

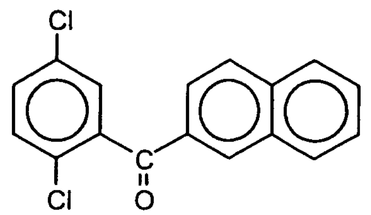

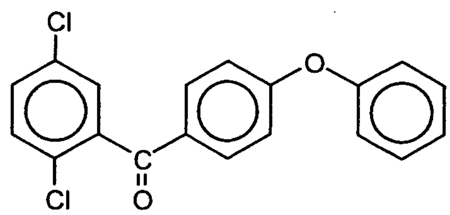

Further, corresponding compounds to the above compounds except that the chlorine atom is replaced with a bromine or an iodine atom are also available.

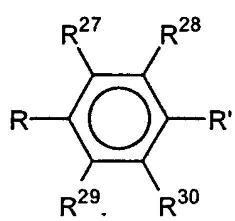

(B-2)

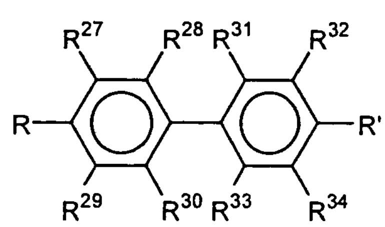

(B-3)

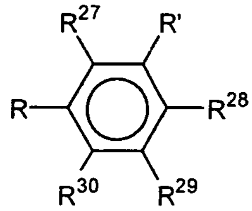

(B-4)

In the formulae (B-2) to (B-4), R and R' may be the same or different and denote the same groups as defined in the formula (A).

$R^{27}$ to $R^{34}$, which may be the same or different, are independently a hydrogen atom, a fluorine atom, an alkyl group, a fluorine-substituted alkyl group, an aryl group or a group represented by the following formula (D):

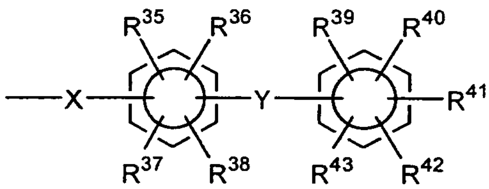

(D)

wherein $R^{35}$ to $R^{43}$, which may be the same or different, are independently a hydrogen atom, a halogen atom, an alkyl group or a fluorine-substituted alkyl group.

Examples of the alkyl and fluorine-substituted alkyl groups designated by $R^{27}$ to $R^{34}$ and $R^{35}$ to $R^{43}$ include the same alkyl and fluorine-substituted alkyl groups as indicated by $R^1$ to $R^8$. Examples of the aryl groups designated by $R^{27}$ to $R^{34}$ include the same aryl groups as indicated by $R^1$ to $R^8$.

X is a divalent electron attracting group selected from the same groups as defined for X in the formula (A).

Y is a divalent electron donating group selected from the same groups as defined for Y in the formula (A).

Examples of the monomers represented by the formula (B-2) include p-dichlorobenzene, p-dimethylsulfonyloxybenzene, 2,5-dichlorotoluene, 2,5-dimethylsulfonyloxybenzene, 2,5-dichloro-p-xylene, 2,5-dichlorobenzotrifluoride, 1,4-dichloro-2,3,5,6-tetrafluorobenzene, and corresponding compounds to the above compounds except that the chlorine atom is replaced with a bromine or an iodine atom.

Examples of the monomers represented by the formula (B-3) include 4,4'-dimethylsulfonyloxybiphenyl, 4,4'-dimethylsulfonyloxy-3,3'-dipropenylbiphenyl, 4,4'-dibromobiphenyl, 4,4'-diiodobiphenyl, 4,4'-dimethylsulfonyloxy-3,3'-dimethylbiphenyl, 4,4'-dimethylsulfonyloxy-3,3'-difluorobiphenyl, 4,4'-dimethylsulfonyloxy-3,3',5,5'-tetrafluorobiphenyl, 4,4'-dibromooctafluorobiphenyl and 4,4'-dimethylsulfonyloxyoctafluorobiphenyl.

Examples of the monomers represented by the formula (B-4) include m-dichlorobenzene, m-dimethylsulfonyloxybenzene, 2,4-dichlorotoluene, 3,5-dichlorotoluene, 2,6-dichlorotoluene, 3,5-dimethylsulfonyloxytoluene, 2,6-dimethylsulfonyloxytoluene, 2,4-dichlorobenzotrifluoride, 3,5-dichlorobenzotrifluoride, 1,3-dibromo-2,4,5,6-tetrafluorobenzene, and corresponding compounds to the above compounds except that the chlorine atom is replaced with a bromine or an iodine atom.

To synthesize the polyarylene, the monomers mentioned above are reacted in the presence of a catalyst. The catalyst used herein is a catalyst system containing a transition metal compound. This catalyst system essentially contains (1) a transition metal salt and a compound which functions as a ligand (referred to as the "ligand component" hereinafter), or a transition metal complex (including a copper salt) to which a ligand(s) has been coordinated, and (2) a reducing agent. A "salt" may be added to increase the polymerization rate.

Examples of the transition metal salt include nickel compounds such as nickel chloride, nickel bromide, nickel iodide and nickel acetylacetonate; palladium compounds such as palladium chloride, palladium bromide and palladium iodide; iron compounds such as iron chloride, iron bromide and iron iodide; and cobalt compounds such as cobalt chloride, cobalt bromide and cobalt iodide. Of these, nickel chloride, nickel bromide, etc. are particularly preferred.

Examples of the ligand component include triphenylphosphine, 2,2'-bipyridine, 1,5-cyclooctadiene and 1,3-bis (diphenylphosphino)propane. Of these, triphenylphosphine and 2,2'-bipyridine are preferred. The ligand components may be used singly or in combination of two or more kinds.

Examples of the transition metal complex with coordinated ligands include
nickel chloride-bis(triphenylphosphine),
nickel bromide-bis(triphenylphosphine),
nickel iodide-bis (triphenylphosphine),

nickel nitrate-bis(triphenylphosphine), nickel chloride(2,2'-bipyridine), nickel bromide(2,2'-bipyridine), nickel iodide(2,2'-bipyridine), nickel nitrate(2,2'-bipyridine), bis(1,5-cyclooctadiene)nickel, tetrakis(triphenylphosphine)nickel, tetrakis(triphenylphosphite)nickel and tetrakis(triphenylphosphine)palladium. Of these, nickel chloride-bis(triphenylphosphine) and nickel chloride(2,2'-bipyridine) are preferred.

Examples of the reducing agent employable in the aforesaid catalyst system include iron, zinc, manganese, aluminum, magnesium, sodium, calcium and the like. Of these, zinc, magnesium and manganese are preferable. These reducing agents may be used in a more activated form brought about by contact with an acid, e.g., an organic acid.

Examples of the "salt" employable in the catalyst system include sodium compounds, such as sodium fluoride, sodium chloride, sodium bromide, sodium iodide and sodium sulfate; potassium compounds, such as potassium fluoride, potassium chloride, potassium bromide, potassium iodide and potassium sulfate; and ammonium compounds, such as tetraethylammonium fluoride, tetraethylammonium chloride, tetraethylammonium bromide, tetraethylammonium iodide and tetraethylammonium sulfate. Of these, sodium bromide, sodium iodide, potassium bromide, tetraethylammonium bromide and tetraethylammonium iodide are preferred.

With respect to the proportion of the above components, the transition metal salt or the transition metal complex is used usually in an amount of 0.0001 to 10 mol, preferably 0.01 to 0.5 mol, based on 1 mol of the total monomers. If the amount thereof is less than 0.0001 mol, the polymerization may not proceed sufficiently. Contrary, the amount thereof exceeding 10 mol may result in a lowered molecular weight of the polyarylene.

When the catalyst system contains the transition metal salt and the ligand component, the ligand component is used usually in an amount of 0.1 to 100 mol, preferably 1 to 10 mol, based on 1 mol of the transition metal salt. If the amount thereof is less than 0 .1 mol, the catalytic activity may become insufficient. Contrary, the amount thereof exceeding 100 mol may result in a lowered molecular weight of the polyarylene.

The amount of the reducing agent is usually in the range of 0.1 to 100 mol, preferably 1 to 10 mol, based on 1 mol of the total monomers. If the reducing agent is used in an amount less than 0.1 mol, the polymerization may not proceed sufficiently. Contrary, the amount thereof exceeding 100 mol may make the purification of the resulting polymer more difficult.

When the "salt" is used, the amount thereof is usually 0.001 to 100 mol, preferably 0.01 to 1 mol, based on 1 mol of the total monomers. If the salt is used in an amount less than 0.0.01 mol, increasing the polymerization rate often cannot be effected sufficiently. Contrary, the amount thereof exceeding 100 mol may result in difficult purification of the resulting polymer.

Exemplary solvents usable in the above polymerization include tetrahydrofuran, cyclohexanone, dimethyl sulfoxide, N,N-dimethylformamide, N,N-dimethylacetamide, N-methyl-2-pyrrolidone, γ-butyrolactone and γ-butyrolactam. Of these, tetrahydrofuran, N,N-dimethylformamide, N,N-dimethylacetamide and N-methyl-2-pyrrolidone are preferred. These polymerization solvents are desirably used after dried sufficiently.

The concentration of the total monomers in the polymerization solvent is usually in the range of 1 to 90 wt%, preferably 5 to 40 wt%.

The polymerization temperature is usually 0 to 200°C, preferably 50 to 120°C, and the polymerization time is usually 0.5 to 100 hours, preferably 1 to 40 hours.

By the polymerization of the monomer (A) of the formula (A) with at least one monomer (B) selected from the monomers of the formulae (B-1) to (B-4) as described above, a polymerization solution containing the polyarylene is thus obtained.

The preferred polyarylene is the compound represented by the following formula (1).

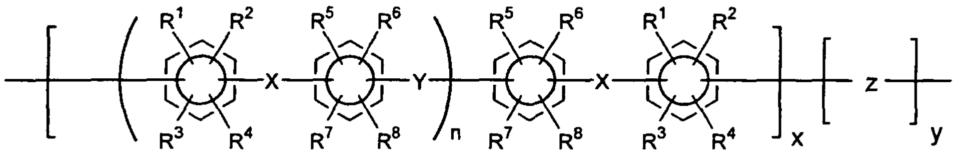

(1)

In the above formula, $R^1$ to $R^8$, X and Y respectively denote the same group as defined in the formula (A). n is defined as in the formula (A). x and y are each an integer of 1 or more. Z is selected from the following formulae, (B-1)' to (B-4)'.

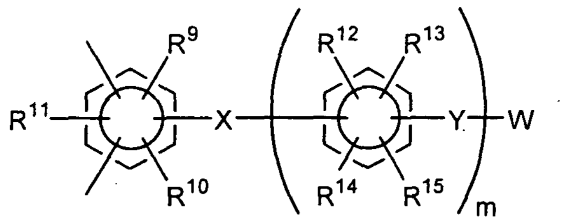

(B-1)'

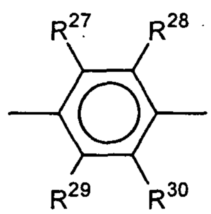

(B-2)'

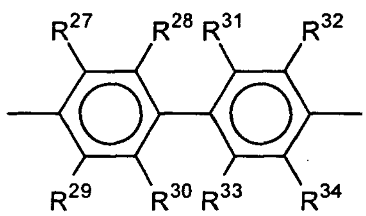

(B-3)'

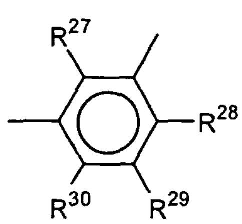

(B-4)'

In the above formulae, $R^9$ to $R^{34}$, X, Y, W and m are respectively defined as in the formulae (B-1) to (B-4).

The sulfonated polyarylene used in the proton conductive membrane of the invention may be obtained by introducing a sulfonic group into the above polyarylene having no sulfonic groups by the conventional technique using a sulfonating agent.

For introduction of a sulfonic group, the polyarylene having no sulfonic groups may be treated with a conventional sulfonating agent, such as sulfuric anhydride, fuming sulfuric acid, chlorosulfonic acid, sulfuric acid or sodium bisulfite, under known conditions (see Polymer Preprints, Japan, vol. 42, No. 3, p. 730 (1993), Polymer Preprints, Japan, vol. 42, No. 3, p. 736 (1994), Polymer Preprints, Japan, vol. 42, No. 7, pp. 2490-2492 (1993)).

Namely, the sulfonation is carried out under such conditions as the polyarylene having no sulfonic groups is reacted with the sulfonating agent in the presence or absence of a solvent. Examples of the solvent include hydrocarbon solvents such as n-hexane; ether-type solvents such as tetrahydrofuran and dioxane; aprotic polar solvents such as dimethylacetamide, dimethylformamide and dimethyl sulfoxide; and halogenated hydrocarbons such as tetrachloroethane, dichloroethane, chloroform and methylene chloride. Although the reaction temperature is not specifically limited, it is usually in the range of -50 to 200°C, preferably -10 to 100°C. The reaction time is usually 0.5 to 1000 hours, preferably 1 to 200 hours.

The sulfonated polyarylene thus obtained will contain the sulfonic group in an amount of 0.5 to 3 mg equivalent/g, preferably 0.8 to 2.8 mg equivalent/g. If the sulfonic group is contained in an amount less than 0.5 mg equivalent/g, the proton conductivity may not be increased. Contrary, when the amount thereof exceeds 3 mg equivalent/g, hydrophilicity is so increased that the resulting polymer becomes water soluble or, if not water soluble, less durable.

The above amount of sulfonic group can be readily controlled by altering the proportion between the monomers (A) and (B) or changing the type or combination of the monomer(s) (B) .

The precursor polymer of the sulfonated polyarylene (i.e., polyarylene prior to the sulfonation) has a weight-average molecular weight of 10,000 to 1,000,000, preferably 20,000 to 800,000, in terms of polystyrene.

(Proton conductive resin composition)

The proton conductive resin composition of the invention comprises the above silica and proton conductive sulfonated polyarylene.

The proton conductive resin composition desirably contains the silica in an amount of 0.5 to 50 parts, preferably 1 to 40 parts, and more preferably 3 to 30 parts by weight based on 100 parts by weight of the sulfonated polyarylene.

The proton conductivity will not be substantially improved either when the amount of silica is less than 0.5 part by weight or when it exceeds 50 parts by weight. The silica in amounts less than 0.5 part by weight cannot reach a sufficient level which effectively leads to enhancement of water retention for increasing the proton conductivity. Whereas amounts over 50 parts by weight will be sufficient to ensure good water retention, but at the same time the proton conductivity will be lowered with quantitative increase of silica since the silica itself has no proton conductivity.

The proton conductive resin composition may be prepared by mixing the sulfonated polyarylene with the silica powder of silica primary particle aggregates having an average particle diameter of not more than 50 nm. The mixing can be carried out by the conventional manner; for example by use of a high-shear mixer such as a homogenizer, a disperser, a paint conditioner (a paint mixing and conditioning machine) or a ball mill. A solvent may be optionally used in the mixing.

(Proton conductive membrane)

The proton conductive membrane of the invention comprises the above proton conductive resin composition.

In addition to the silica powder and the sulfonated polyarylene, the proton conductive membrane may optionally contain an inorganic acid such as sulfuric acid or phosphoric acid, an organic acid containing carboxylic acid, an appropriate amount of water, etc.

Exemplary methods of preparing the proton conductive membrane include a casting method or melt forming process in which the proton conductive resin composition is dissolved in a solvent and the resultant solution is flow-cast to obtain a film.

Examples of the solvent for use in the casting method include aprotic polar solvents such as dimethylacetamide, dimethylformamide, N-methyl-2-pyrrolidone and dimethyl sulfoxide. The solvent may be mixed with an alcohol solvent such as methanol.

The proton conductive membrane of the invention can be used as electrolytes for primary and secondary batteries, solid polymer electrolytes for fuel cells and other proton conductive membranes for display elements, sensors, signaling media, solid condensers and ion exchange membranes.

The proton conductive membrane ranges in thickness from 10 to 100μm, preferably from 20 to 80μm.

**EXAMPLE**

The present invention will be hereinafter described in detail by the following Examples, but it should be construed that the invention is in no way limited to those Examples.

In the Examples and Comparative Example, a sulfonated copolymer (sulfonic acid concentration (hereinafter

"IEC") = 2.10 meq/g) that had Mn of 50,000 and Mw of 150,000, was used as the sulfonated polyarylene. The copolymer comprised 2,5-dichloro-4'-(4-phenoxy)phenoxybenzophenone and a condensate chlorobenzoyl-terminated at both ends of 4,4'-dichlorobenzophenone and
2,2-bis(4-hydroxyphenyl)-1,1,1,3,3,3-hexafluoropropane (Mn = 11,200, Mw = 27,500) in 97:3 molar ratio.

(Measurement of proton conductivity)

A 5 mm-wide strip specimen of the membrane, holding 5 platinum wires (diameter: 0.5 mm) on its surface, was placed in a thermo-hygrostat. Then the alternating current impedance between the platinum wires was measured at 85°C and 10 kHz under a different relative humidity of 40%, 50%, 70% or 90%.
The above alternating current resistance measurement was carried out using a chemical impedance measuring system (NF Corporation) and a thermo-hygrostat JW241 (Yamato Science Co., Ltd.).
The alternating current resistance was measured in each case where the interelectrode distance was changed from 5 mm to 20 mm among the 5 platinum wires.
The resistivity of the membrane was calculated by the following formula from a gradient between the interelectrode distance and the resistance. The reciprocal number of resistivity was obtained as the alternating current impedance.

$$\text{Resistivity R } (\Omega\cdot\text{cm}) = 0.5 \text{ (cm)} \times \text{membrane thickness (cm)}$$

$$\times \text{ resistance/interelectrode distance gradient } (\Omega/\text{cm})$$

Example 1

The sulfonated polyarylene 60g was placed in a 1000 ml polybottle and was dissolved by addition of N-methyl-2-pyrrolidone (NMP) 340g. Thereafter, a fumed silica (Aerosil R972 available from Japan Aerosil Company) having an average aggregate diameter of about 16 nm, was added in an amount of 6g (10 wt%) to the solution. Alumina balls 900g were further added, and the contents were stirred with a paint conditioner for 20 minutes. The uniformly dispersed solution obtained as above was filtered through a 200-mesh wire filter to remove the alumina balls, thereby obtaining a solution of a complex of fumed silica and sulfonated polyarylene.
The solution was applied over a PET (polyethylene terephthalate) film by use of a coater and a doctor blade. The solution was predried at 80°C for 30 minutes to form a membrane. The membrane was stripped off from the PET film and further dried at 150°C for 1 hour with its outer frame fixed. Thus, a proton conductive membrane comprising a complex of fumed silica and sulfonated polyarylene was obtained with 40μm thickness.
The complex membrane was subjected to measurements of proton conductivity. The results are shown in Table 1.

Example 2

A membrane comprising a complex of fumed silica and sulfonated polyarylene was obtained in the same manner as in Example 1 except that the fumed silica was used in an amount of 3g. The complex membrane was subjected to measurements of proton conductivity. The results are shown in Table 1.

Comparative Example 1

The sulfonated polyarylene 6.0g was placed in a 100 ml plastic bottle and was dissolved by addition of N-methyl-2-pyrrolidone (NMP) 34g to obtain a polymer solution.
A proton conductive polymer membrane was prepared from the polymer solution in the same manner as in Example 1, and the proton conductivity thereof was measured. The results are shown in Table 1.

Table 1

| | | Ex. 1 | Ex. 2 | Comp. Ex. 1 |
|---|---|---|---|---|
| Proton conductivity (S/cm) | 90% RH | 0.2103 | 0.2088 | 0.1986 |
| | 70% RH | 0.0833 | 0.0837 | 0.0754 |
| | 50% RH | 0.0218 | 0.0233 | 0.0193 |
| | 40% RH | 0.0090 | 0.0100 | 0.0076 |

It is obvious from the comparison between Examples and Comparative Example that by making a complex with a fumed silica the proton conductivity can be improved.

The proton conductive membrane made from the proton conductive resin composition according to the invention can exhibit high proton conductivity without increasing its acid concentration. The proton conductive membrane has excellent water resistance and toughness.

The invention provides a proton conductive resin composition from which proton conductive membranes exhibiting high proton conductivity can be obtained without treatment to increase the acid concentration in the membrane. The invention also provides a method for preparing the composition, and a proton conductive membrane comprising the composition.

The proton conductive resin composition comprises a silica and a proton conductive sulfonated polyarylene. The method for preparing proton conductive resin compositions comprises mixing aggregates of silica powder having an average aggregate diameter of not more than 50 nm with a sulfonated polyarylene.

## Claims

**1.** A proton conductive resin composition comprising a silica and a sulfonated polyarylene capable of proton conduction.

**2.** The proton conductive resin composition of Claim 1, containing the silica in an amount of 0.5 to 50 parts by weight per 100 parts by weight of the sulfonated polyarylene.

**3.** A method for preparing proton conductive resin compositions, comprising mixing of silica powder having an average particle diameter of not more than 50 nm with a sulfonated polyarylene.

**4.** A proton conductive membrane comprising the proton conductive resin composition of Claim 1 or 2.

European Patent Office

# EUROPEAN SEARCH REPORT

Application Number
EP 03 01 8584

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | DATABASE WPI<br>Section Ch, Week 200240<br>Derwent Publications Ltd., London, GB;<br>Class L03, AN 2002-365640<br>XP002258521<br>& JP 2001 307752 A (KANEKA CORP),<br>2 November 2001 (2001-11-02)<br>* abstract *<br>--- | 1,4 | C08K3/36<br>C08L101/06<br>C08J5/22 |
| X | DATABASE WPI<br>Section Ch, Week 199820<br>Derwent Publications Ltd., London, GB;<br>Class A85, AN 1998-226706<br>XP002258522<br>& JP 10 069817 A (MATSUSHITA DENKI SANGYO KK), 10 March 1998 (1998-03-10)<br>* abstract *<br>--- | 1 | |
| X | DATABASE CA 'Online!<br>CHEMICAL ABSTRACTS SERVICE, COLUMBUS, OHIO, US;<br>MATSUDA, ATSUNORI ET AL:<br>"Proton-conductive composites composed of phosphoric acid-doped silica gel and organic polymers with sulfo groups"<br>retrieved from STN<br>Database accession no. 132:211331<br>XP002258520<br>* abstract *<br>& JOURNAL OF THE CERAMIC SOCIETY OF JAPAN (2000), 108(JAN.), 45-50 ,<br>--- | 1 | TECHNICAL FIELDS SEARCHED (Int.Cl.7)<br>C08K<br>C08L<br>C08J |
| X | US 5 886 130 A (WANG YING ET AL)<br>23 March 1999 (1999-03-23)<br>* column 13, line 50 *<br>* claim 1 *<br>---<br>-/-- | 1 | |

The present search report has been drawn up for all claims

| Place of search | Date of completion of the search | Examiner |
|---|---|---|
| THE HAGUE | 21 October 2003 | Rose, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

European Patent Office

# EUROPEAN SEARCH REPORT

Application Number
EP 03 01 8584

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 138 712 A (JSR CORP)<br>4 October 2001 (2001-10-04)<br>* claims 1-5,7 *<br>--- | 1-4 | |
| A | US 5 403 675 A (RIKUKAWA MASAHIRO ET AL)<br>4 April 1995 (1995-04-04)<br>* claims 1,12 *<br>----- | 1-4 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 21 October 2003 | Rose, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 01 8584

This annex lists the patent family membersrelating to the patent documents cited in the above–mentioned European search report.
The members are as contained in the European Patent Office EDP file on
The European Patent Office is in no way liable for these particulars which are merely given for the purpose of information.

21-10-2003

| Patent document cited in search report | | Publication date | Patent family member(s) | | | Publication date |
|---|---|---|---|---|---|---|
| JP 2001307752 | A | 02-11-2001 | NONE | | | |
| JP 10069817 | A | 10-03-1998 | NONE | | | |
| US 5886130 | A | 23-03-1999 | NONE | | | |
| EP 1138712 | A | 04-10-2001 | JP | 2001329053 | A | 27-11-2001 |
| | | | CA | 2342461 | A1 | 29-09-2001 |
| | | | EP | 1138712 | A2 | 04-10-2001 |
| | | | JP | 2001342241 | A | 11-12-2001 |
| | | | US | 2001037000 | A1 | 01-11-2001 |
| US 5403675 | A | 04-04-1995 | WO | 9424717 | A1 | 27-10-1994 |

EPO FORM P0459

For more details about this annex : see Official Journal of the European Patent Office, No. 12/82